# DEMANDE DE BREVET EUROPEEN

(11) **EP 1 365 124 A1**
(43) Date de publication de la demande: **26.11.2003**
(21) Numéro de dépôt: 03291130.7
(22) Date de dépôt: 14.05.2003
(51) Int. Cl.: F02B 29/04, F02M 25/07, F01N 3/08

(54) **Système d'alimentation en gaz d'un moteur diesel de véhicule automobile**

(30) Priorité: 22.05.2002 FR 0206237
(71) Demandeur: Peugeot Citroen Automobiles SA, 78943 Vélizy-Villacoublay (FR)
(72) Inventeur: Colignon, Christophe, 92300 Levallois Perret (FR)
(74) Mandataire: Habasque, Etienne Joel Jean-François

(57) **Abrégé**

Ce système d'alimentation en gaz d'un moteur Diesel de véhicule automobile, du type comportant une arrivée d'air frais (4) et une arrivée de gaz d'échappement (5) à recycler dans le moteur (1), délivrés par un circuit de prélèvement correspondant (7), muni de moyens (8) d'ouverture/fermeture de celui-ci, sur une ligne d'échappement (3) du moteur (1), équipée d'un filtre à particules (6), est caractérisé en ce que le circuit de prélèvement (7) des gaz d'échappement est raccordé à la ligne (3) en aval du filtre à particules (6).

## Description

La présente invention concerne un système d'alimentation en gaz d'un moteur Diesel de véhicule automobile.

Plus particulièrement, l'invention concerne un tel système qui comporte une arrivée d'air frais et une arrivée de gaz d'échappement à recycler dans le moteur, délivrés par un circuit de prélèvement correspondant, muni de moyens d'ouverture/fermeture de celui-ci, sur une ligne d'échappement du moteur, équipée d'un filtre à particules.

De façon classique, un tel circuit est appelé « circuit d'EGR », les gaz à recycler sont appelés « gaz d'EGR » et les moyens d'ouverture/fermeture du circuit sont appelés « vanne d'EGR ».

Actuellement, les gaz d'EGR sont prélevés par le circuit au niveau du collecteur d'échappement du moteur ou directement dans la culasse du moteur. Mais, ces gaz d'EGR contiennent alors des particules qui, en se refroidissant, se déposent sur les parois des différents conduits et organes correspondants de ce circuit et en réduisent l'efficacité.

De plus, ces particules sont amenées éventuellement à colmater des moyens de contrôle de la température des gaz admis dans le moteur, de même que d'éventuels capteurs insérés le long de la ligne d'alimentation en gaz de celui-ci.

Le but de l'invention est donc de résoudre ces problèmes.

A cet effet, l'invention a pour objet un système d'alimentation en gaz d'un moteur Diesel de véhicule automobile, du type comportant une arrivée d'air frais et une arrivée de gaz d'échappement à recycler dans le moteur délivrés par un circuit de prélèvement correspondant, muni de moyens d'ouverture/fermeture de celui-ci, sur une ligne d'échappement du moteur équipée d'un filtre à particules, caractérisé en ce que le circuit de prélèvement des gaz d'échappement est raccordé à la ligne en aval du filtre à particules en ce que les moyens d'admission des gaz comprennent un échangeur de chaleur de contrôle de la température des gaz admis dans le moteur et en ce que des moyens de court-circuitage de cet échangeur des moyens d'admission, sont prévus.

Selon d'autres caractéristiques :
- le circuit de prélèvement de gaz comporte des moyens de mise en circulation des gaz en direction du moteur ;
- le circuit de prélèvement des gaz comporte un échangeur de chaleur de refroidissement des gaz d'échappement à recycler ;
- le moteur est associé à un turbocompresseur comprenant une portion de turbine et une portion de compresseur ;
- l'arrivée de gaz d'échappement à recycler est raccordée en aval de la portion de compresseur du turbocompresseur ;
- l'arrivée de gaz d'échappement à recycler est raccordée en amont de la portion de compresseur du turbocompresseur ;
- le filtre à particules est un filtre catalysé ;
- le filtre à particules est associé à un catalyseur ; et
- le filtre à particules est associé à un piège à Nox.

L'invention sera mieux comprise à la lecture de la description qui va suivre, donnée uniquement à titre d'exemple et faite en se référant aux dessins annexés sur lesquels ;

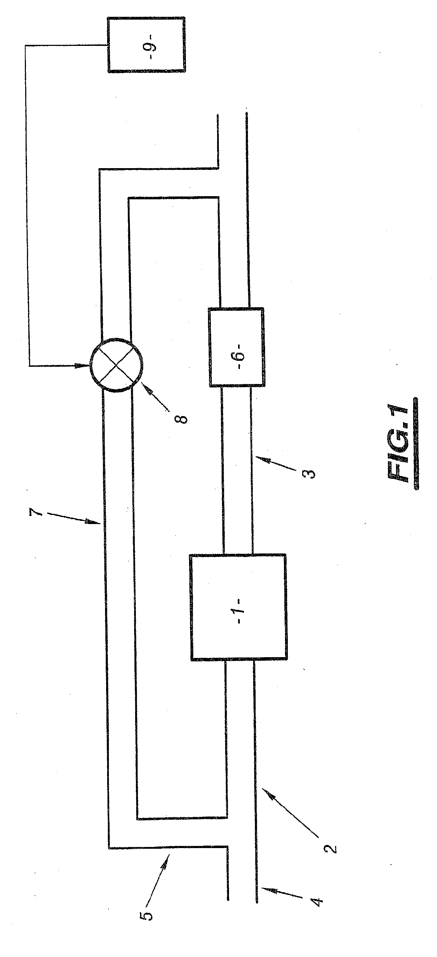

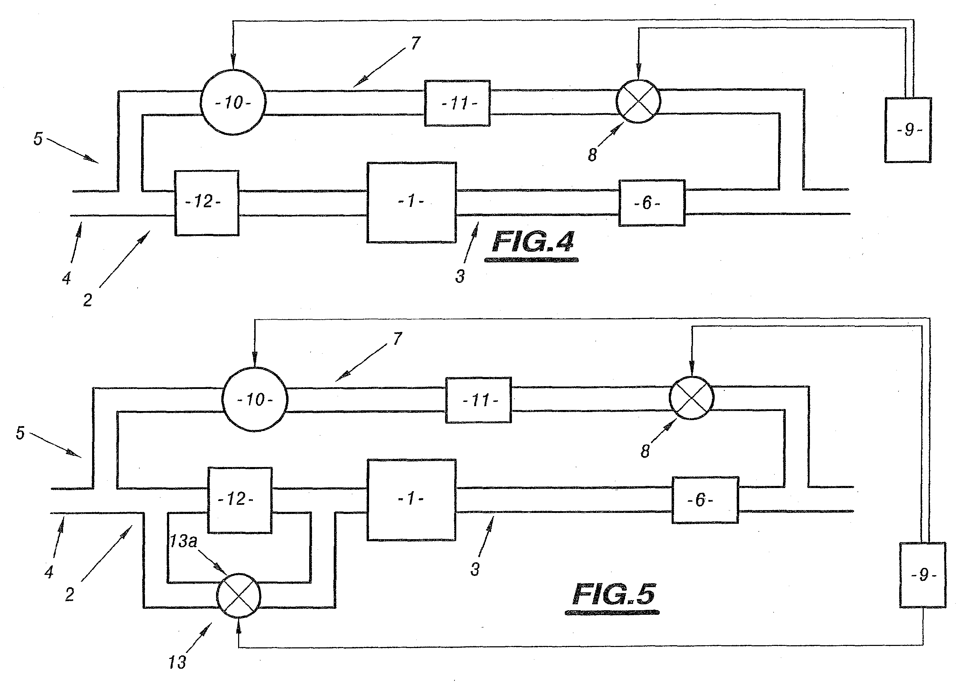

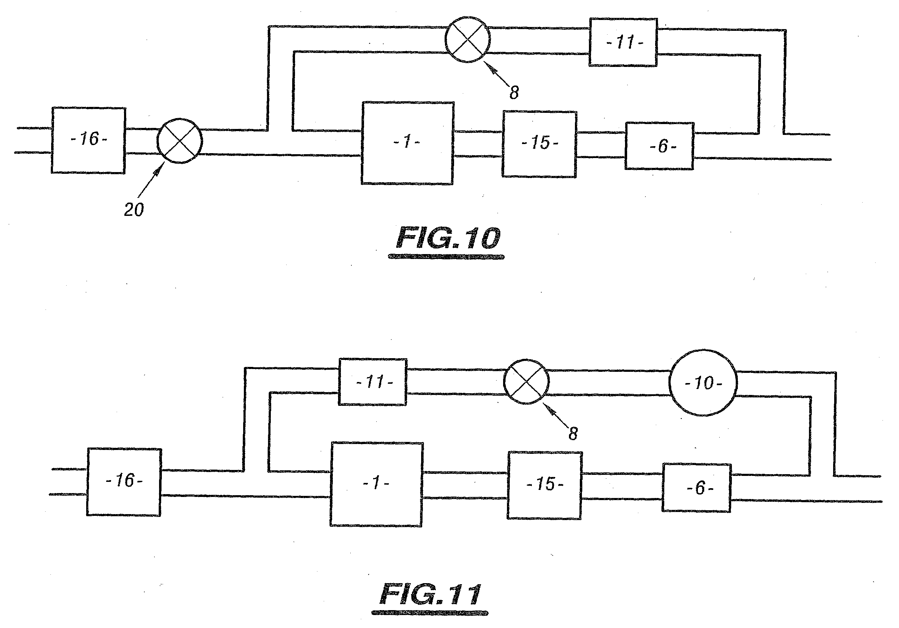

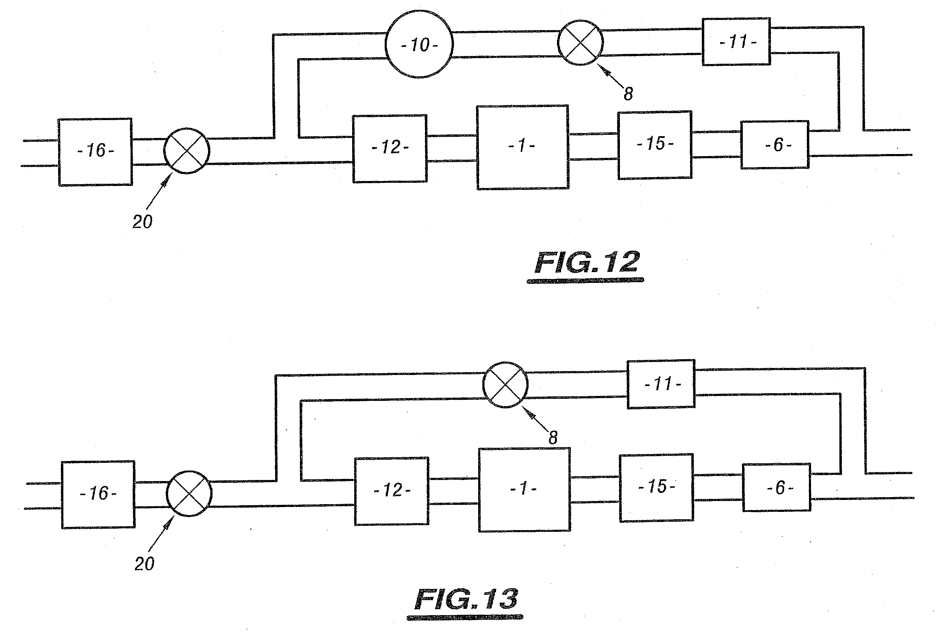

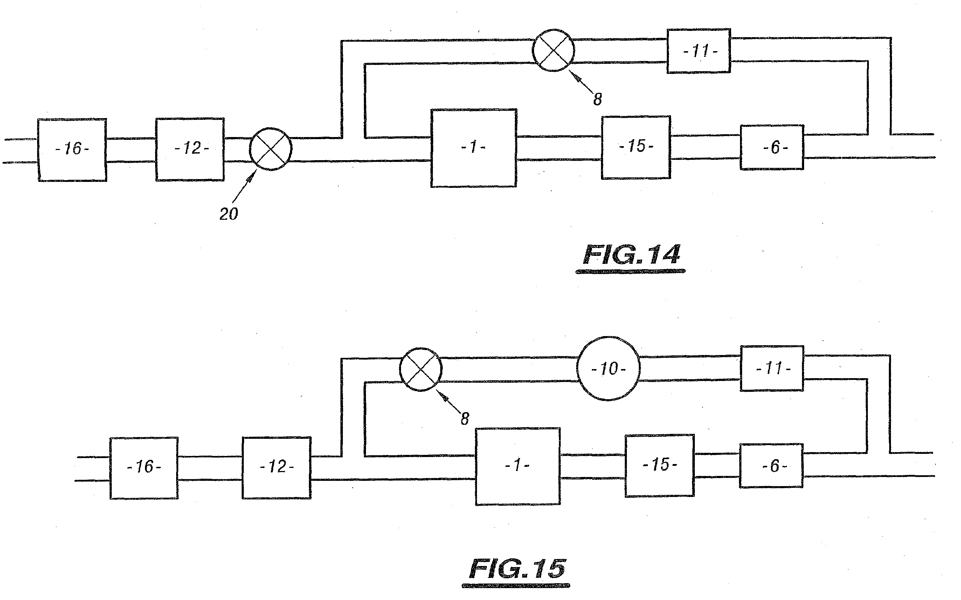

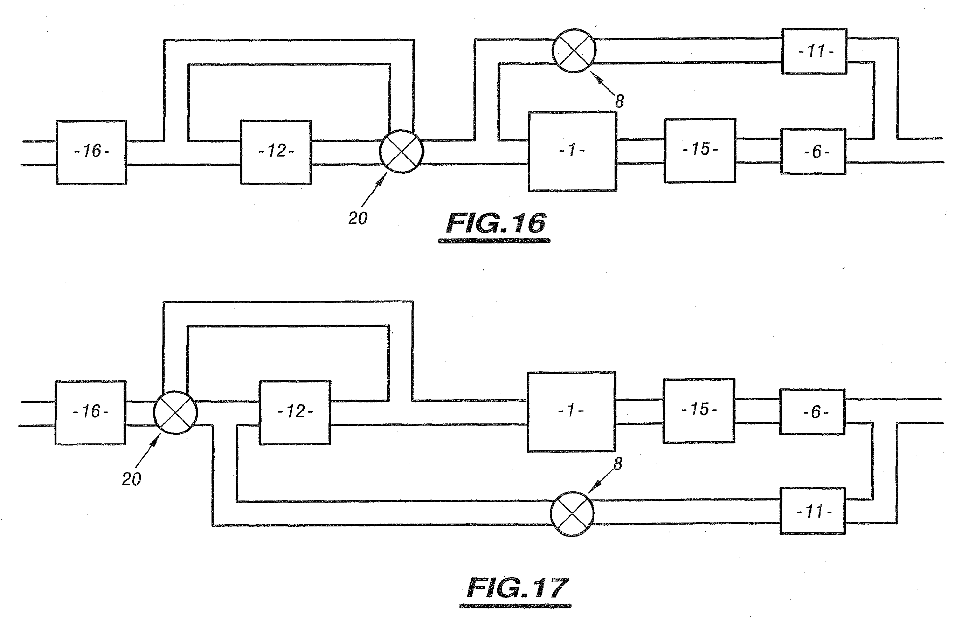

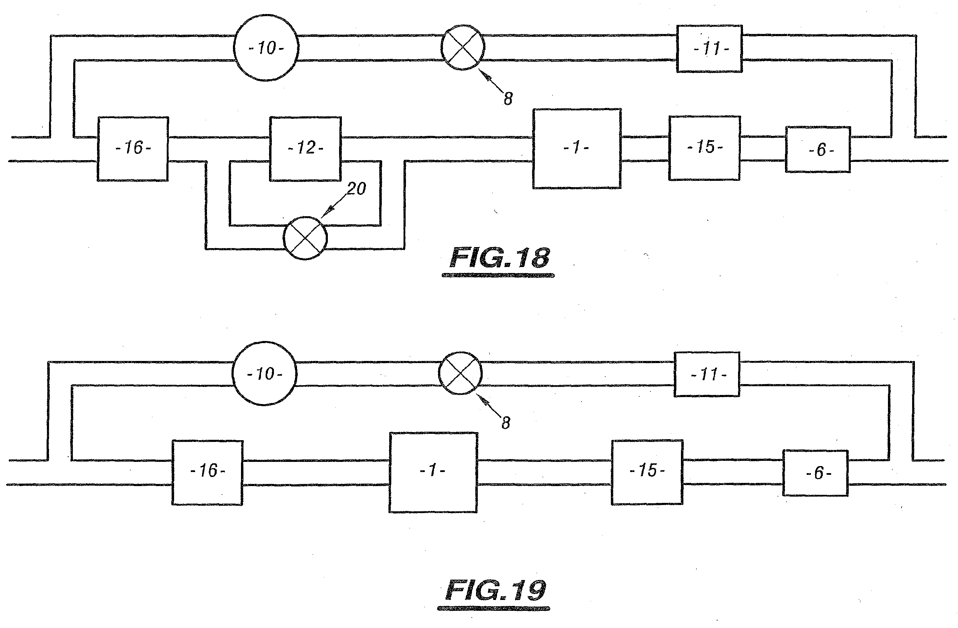

- les Figs.1 à 19 représentent sous la forme de schémas synoptiques la structure et le fonctionnement de différentes variantes de réalisation d'un système d'alimentation selon l'invention.

On a en effet représenté sur la figure 1, une forme de réalisation d'un système d'alimentation en gaz d'un moteur Diesel de véhicule automobile.

Ce moteur est désigné par la référence générale 1 et est associé de façon classique à des moyens d'admission de gaz désignés par la référence générale 2 et à des moyens d'échappement de gaz désignés par la référence générale 3.

De façon classique également, ce système comporte une arrivée d'air frais désignée par la référence générale 4 sur ces figures et une arrivée de gaz d'échappement à recycler dans le moteur, cette arrivée étant désignée par la référence générale 5.

En fait, cette arrivée de gaz d'échappement est raccordée à la ligne d'échappement du moteur comme cela sera décrit plus en détail par la suite.

Les moyens d'échappement du moteur comportent en effet une ligne d'échappement équipée de moyens de dépollution désignés par la référence générale 6, ces moyens de dépollution comprenant par exemple au moins un filtre à particules.

Ce filtre à particules peut être formé par un filtre à particules catalysé ou non et être associé ou non à d'autres organes de dépollution tels que par exemple un catalyseur, un piège à Nox, etc..., ou peut cumuler les fonctions correspondantes de filtre à particules, de catalyseur d'oxydation et de piège à Nox.

Des combinaisons de ces différents organes peuvent également être intégrés dans la ligne d'échappement pour assurer la fonction de dépollution des gaz d'échappement.

L'arrivée de gaz d'échappement à recycler dans le moteur, désignée par la référence générale 5, est en fait issue d'un circuit de prélèvement des gaz d'échappement, désigné par la référence générale 7 sur cette figure, qui est raccordé à la ligne d'échappement 3 en aval du filtre à particules 6.

Ce circuit de prélèvement est également appelé circuit d'EGR et est muni de moyens d'ouverture/fermeture de celui-ci, désignés par la référence générale 8 sur cette figure et comprenant par exemple une vanne dite d'EGR pilotée par des moyens de traitement d'informations de façon classique, désignés par la référence générale 9, et mettant en oeuvre des stratégies de commande de celle-ci à partir de différentes informations délivrées par des moyens d'acquisition implantés sur le moteur et ses organes périphériques de façon classique.

On conçoit alors qu'une telle structure présente un certain nombre d'avantages.

En effet, les gaz d'EGR prélevés en sortie du filtre à particules 6, sont dépourvus de particules, ce qui permet de résoudre les problèmes d'encrassement et de colmatage mentionnés précédemment.

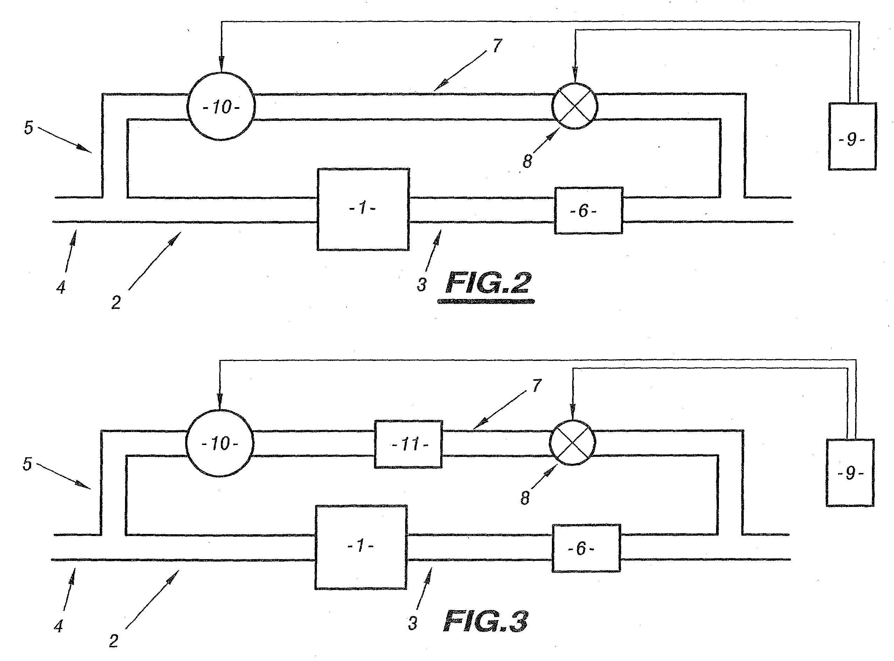

Bien entendu, différentes variantes de réalisation de ce système peuvent être envisagées et des éléments complémentaires peuvent être intégrés dans ce système, comme cela est illustré par exemple sur la figure 2.

On reconnaît en effet sur cette figure 2, la structure générale du système qui a été décrit en regard de la figure 1 et dans laquelle les mêmes numéros de référence désignent des pièces identiques ou analogues.

Sur cette figure 2, le circuit de recyclage des gaz 7 est équipé en plus de la vanne d'EGR 8, de moyens 10 de mise en circulation des gaz dans ce circuit. Ces moyens comprennent par exemple une pompe pilotée par les moyens de traitement d'informations 9 pour assurer la mise en circulation des gaz en direction du moteur.

En effet, la pression des gaz en aval du filtre à particules peut ne pas être suffisante pour assurer leur recirculation dans le moteur et la pompe peut alors être nécessaire pour assurer le recyclage, l'air frais et le gaz d'échappement à recycler se mélangeant alors avant leur entrée dans le moteur, au niveau des moyens d'admission.

Une disposition inverse de celle représentée sur la figure 2 par la vanne 8 et la pompe 10, peut également être envisagée.

Sur la figure 3, on a représenté une autre variante de réalisation dans laquelle le circuit d'EGR 7 comporte également des moyens 11 formant échangeur de chaleur permettant par exemple de refroidir les gaz d'EGR avant leur introduction dans le moteur.

Dans cette figure 3 également, les mêmes numéros de référence indiquent des pièces identiques ou analogues à celles représentées sur les figures 1 et 2, ces références sont également utilisées dans les autres figures.

Dans la figure 4, les moyens d'admission de gaz 2 en entrée du moteur comportent également des moyens formant échangeur de chaleur désignés par la référence générale 12 permettant de contrôler la température des gaz admis dans ce moteur.

Sur la figure 5, on peut constater que ces moyens formant échangeur de chaleur 12 peuvent être associés à des moyens de court-circuitage de ceux-ci, désignés par la référence générale 13 et comprenant par exemple une vanne de contrôle 13a dont le fonctionnement est piloté par les moyens de traitement d'informations 9 pour réguler la température des gaz admis dans le moteur.

Sur la figure 6, on a illustré une variante de réalisation dans laquelle un turbocompresseur désigné par la référence générale 14, est également associé au moteur.

Ce turbocompresseur comporte alors une portion de turbine désignée par la référence générale 15 associée aux moyens d'échappement du moteur et une portion de compresseur 16 associée aux moyens d'admission et sur cette figure, le circuit de recyclage est raccordé aux moyens d'admission, en aval de cette portion de compresseur.

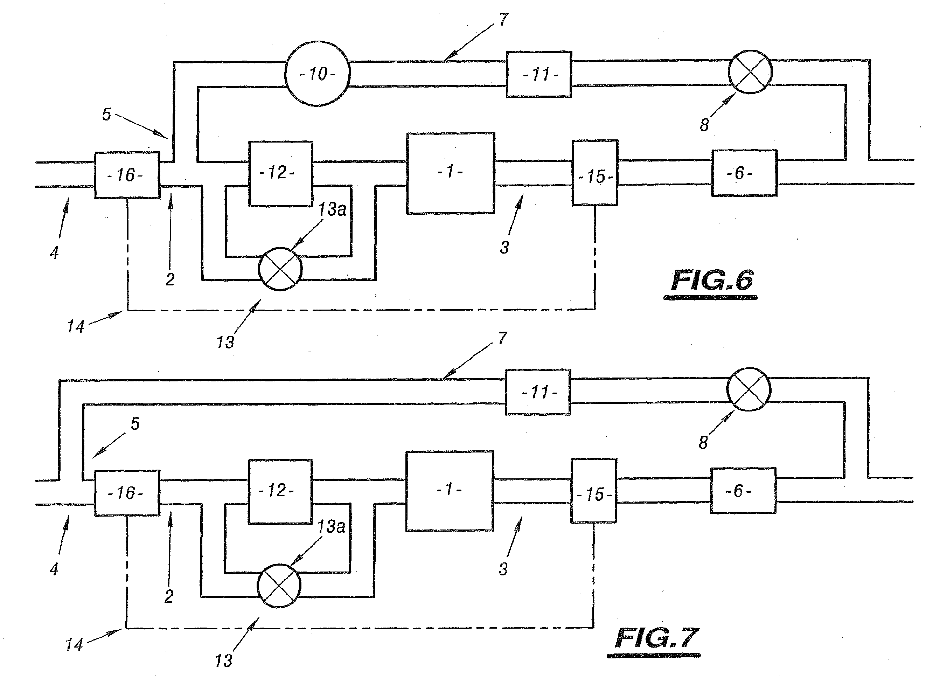

Sur la figure 7, le circuit de recyclage est raccordé en amont de cette portion de compresseur du turbocompresseur et dans ce cas, il peut s'avérer inutile d'utiliser des moyens de mise en circulation des gaz dans ce circuit de recyclage.

Bien entendu, d'autres dispositions et d'autres combinaisons des différents organes mentionnés précédemment peuvent être envisagées.

Ainsi par exemple, un échangeur EGR 11 peut également être prévu avec d'autres dispositions des éléments décrits précédemment.

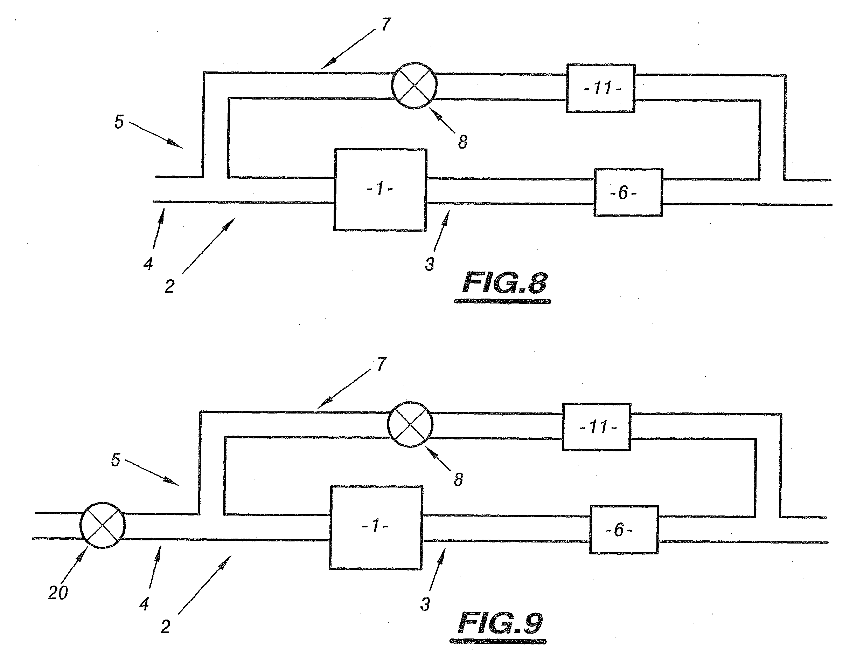

Ainsi, par exemple, sur la figure 8, un échangeur EGR 11 est associé à la vanne d'EGR 8 dans le circuit correspondant, tandis que sur la figure 9, un papillon de contrôle 20 est illustré.

Dans les figures suivantes, on a illustré des modes de réalisation dans lesquels un turbocompresseur est associé au moteur, mais sans utiliser de refroidisseur d'air de suralimentation.

Dans ces différentes figures, des éléments identiques ou analogues à ceux déjà décrits en regard des figures précédentes, portent les mêmes numéros de référence et ne nécessitent donc pas de description détaillée dans la mesure où seules leur disposition et/ou leur intégration ou non dans les différents circuits décrits, varient.

## Revendications

1. Système d'alimentation en gaz d'un moteur Diesel de véhicule automobile, du type comportant une arrivée d'air frais (4) et une arrivée de gaz d'échappement (5) à recycler dans le moteur (1) délivrés par un circuit de prélèvement correspondant (7), muni de moyens (8) d'ouverture/fermeture de celui-ci, sur une ligne d'échappement (3) du moteur (1) équipée d'un filtre à particules (6), **caractérisé en ce que** le circuit de prélèvement (7) des gaz d'échappement est raccordé à la ligne (3) en aval du filtre à particules (6), **en ce que** les moyens d'admission des gaz (2) comprennent un échangeur de chaleur (12) de contrôle de la température des gaz admis dans le moteur et **en ce que** des moyens de court-circuitage (13) de cet échangeur (12) des moyens d'admission, sont prévus.

2. Système selon la revendication 1, **caractérisé en ce que** le circuit de prélèvement de gaz (7) comporte des moyens (10) de mise en circulation des gaz en direction du moteur.

3. Système selon la revendication 1 ou 2, **caractérisé en ce que** le circuit de prélèvement des gaz (7) comporte un échangeur de chaleur (11) de refroidissement des gaz d'échappement à recycler.

4. Système selon l'une quelconque des revendications précédentes, **caractérisé en ce que** le moteur (1) est associé à un turbocompresseur (14) comprenant une portion de turbine (15) et une portion de compresseur (16).

5. Système selon la revendication 4, **caractérisé en ce que** l'arrivée de gaz d'échappement (5) à recycler est raccordée en aval de la portion de compresseur (16) du turbocompresseur (14).

6. Système selon l'une quelconque des revendications 1 à 4, **caractérisé en ce que** l'arrivée de gaz d'échappement (5) à recycler est raccordée en amont de la portion de compresseur (16) du turbocompresseur (14).

7. Système selon l'une quelconque des revendications précédentes, **caractérisé en ce que** le filtre à particules (6) est un filtre catalysé.

8. Système selon l'une quelconque des revendications précédentes, **caractérisé en ce que** le filtre à particules (6) est associé à un catalyseur.

9. Système selon l'une quelconque des revendications précédentes, **caractérisé en ce que** le filtre à particules (6) est associé à un piège à Nox.
